# EUROPEAN PATENT SPECIFICATION

(11) **EP 3 095 590 B1**
(45) Date of publication and mention of the grant of the patent: **02.10.2019**
(21) Application number: 15400019.4
(22) Date of filing: 18.05.2015
(51) Int. Cl.: B29C 65/56, B29C 65/76, B29C 70/72, B64C 1/14, B29K 63/00, B29K 105/08, B29K 307/04

(54) **A CARBON FIBER REINFORCED POLYMER PANEL ARRANGEMENT AND METHOD**
KOHLENSTOFFFASERVERSTÄRKTE POLYMERPLATTENANORDNUNG UND VERFAHREN
AGENCEMENT DE PANNEAU DE POLYMÈRE RENFORCÉ DE FIBRES DE CARBONE ET PROCEDE

(43) Date of publication of application: 23.11.2016
(73) Proprietor: AIRBUS HELICOPTERS DEUTSCHLAND GmbH, 86609 Donauwörth (DE)
(72) Inventor: Vayssiere, Aurélien, D-86694 Niederschönenfeld GT Feldheim (DE); Joussellin, Fabrice, D-86150 Augsburg (DE); Bittmann, Konrad, D-86703 Roegling (DE)
(74) Representative: GPI & Associés

(56) References cited:
- WO-A2-2008/021793
- US-A- 4 220 298
- US-A1- 2014 166 417

## Description

The present invention is related to a carbon fiber reinforced polymer panel arrangement comprising at least one carbon fiber reinforced polymer panel according to claim 1 and to a method according to claim 10.

Various vehicles are provided with security and maintenance frame structures, such as emergency exits, maintenance trapdoors and/or firewall arrangements. For instance, aircrafts and, by way of example rotary wing aircrafts, comprise emergency exits that are required in order to allow passengers and crew members to exit the rotary wing aircrafts rapidly and securely in case of an emergency. Furthermore, such rotary wing aircrafts comprise maintenance trapdoors for accessing aircraft components that need to be checked regularly in order to guarantee a safe and reliable condition of the rotary wing aircrafts. Moreover, if such rotary wing aircrafts are equipped with air breathing propulsion engines, they usually comprise firewall arrangements in order to separate the engines from the rest of the rotary wing aircrafts in case of a fire of the air breathing propulsion engines.

Such emergency exits, maintenance trapdoors and/or firewall arrangements of the rotary wing aircrafts can be implemented using composite panels, in particular carbon fiber reinforced polymer panels. Thus, underlying costs and weight of these security and maintenance structures can be reduced advantageously.

However, composite panels that are used for implementing maintenance trapdoors should preferably be arranged in the rotary wing aircrafts in a manner that allows a quick and easy opening and/or removal of the composite panels for inspection and maintenance purposes. This is crucial in realization of such maintenance trapdoors, as aircraft components that must be inspected regularly are frequently difficult to access so that maintenance operations are usually time consuming and expensive. This similarly applies to composite panels that are used for implementing firewall arrangements provided in the rotary wing aircrafts, which should preferably also be arranged in the rotary wing aircrafts in a manner that allows a quick and easy opening and/or removal thereof for accessing corresponding aircraft engines with respect to inspection and maintenance purposes. This likewise applies to so-called engine cowlings, which are therefore considered to be also addressed when reference is made to the firewall arrangements. Furthermore, composite panels that are used for implementing emergency exits must also be arranged in the rotary wing aircrafts in a manner that allows a quick and easy opening and/or removal thereof in order to enable a fast and secure evacuation of the aircrafts in case of an emergency. In other words, all such composite panels that are used for implementing emergency exits, maintenance trapdoors and/or firewall arrangements in rotary wing aircrafts must be mounted or attached to surrounding or adjacent aircraft components and, in particular, composite panels in a detachable manner that allows a fast and easy separation of the composite panels from each other.

The document US 2014/0166417 A1 describes a process for making a plastic luggage shell from self-reinforced thermoplastic material, wherein separate shells are detachably connected to each other by means of an associated zip fastener, which allows a fast and easy detachment of the shells from each other. More generally, the described process allows the formation of highly durable but extremely lightweight components by manufacturing the plastic luggage shell from self-reinforced thermoplastic material, e. g. from polypropylene reinforced with oriented polypropylene fibers. Each plastic luggage shell edge is stitched to an associated zipper tape of the zip fastener such that the shells are firmly held together in telescoped position with their edges firmly overlapping, when a corresponding zipper slider of the zip fastener is operated to close the latter.

However, such shells that are made of thermoplastic material cannot be used for implementing panels that are adapted for use in structural applications and that are suitable for resisting durably to elevated temperatures as required, e. g., in an application in firewall arrangements. Furthermore, the shell edges are merely connected to the zipper tapes of the zip fastener by means of stitching. Such a connection is, however, not suitable for applications, and in particular structural applications, where an increased airtightness and/or watertightness is required.

The document WO 2014/077689 A1 describes a method of manufacturing a molded article of a rubber polymer to which another article is detachably connected. More specifically, the molded article is detachably connected to an actuating element using a coupling mean that is implemented as a zip fastener. A corresponding zip tape associated with the molded article is made from a textile fabric that is embedded in a rubber matrix of the molded article, while a zip tape associated with the actuating element is welded to the latter.

However, such a molded article that is made of a rubber polymer cannot be used for implementing panels that are suitable for resisting durably to elevated temperatures as required, e. g., in an application in firewall arrangements. They are also not suitable for implementing panels that are used in implementing emergency exits and do not withstand comparatively high temperatures.

The document US 4 220 298 A describes a flexible vehicle door, which provides an occupant of a vehicle with both, a standard opening for ingress and egress in and an emergency outlet from the vehicle. A semi-permanent attachment of the door to the vehicle is provided by use of Velcro in combination with snap fasteners in a flexible hinged portion together with a handle, such that the entire door may be yanked open in an emergency case. A zipper opening is also provided for standard operation of the door.

The document EP 2 492 217 A1 describes an entirely textile-based, lightweight, and blast resistant cargo container system, which contains a gastight zip fastener as opening and closure system. The zip fastener is adapted to resist to an explosion and comprises interlocking elements that are made of high density polyethylene with short fibers. The zip fastener is sewed and/or glued to a textile layer component of a high-strength multilayer textile structure defining the cargo container system.

However, such entirely textile-based structures cannot be used for implementing panels that are suitable for resisting durably to elevated temperatures as required, e. g., in an application in firewall arrangements. Furthermore, they are not suitable for implementing panels that can be used as maintenance trapdoors and/or emergency exits in rotary wing aircrafts, as well as in applications where a durable increased airtightness and/or watertightness is required. WO2008/021793A2 discloses a carbon reinforced polymer panel arrangement according to the preamble of claim 1.

It is, therefore, an object of the present invention to provide a new carbon fiber reinforced polymer panel arrangement comprising at least one carbon fiber reinforced polymer panel that can be easily and rapidly mounted to and detached from associated carbon fiber reinforced polymer panels, and that is suitable for implementation of maintenance trapdoors, firewall arrangements and/or emergency exits in a vehicle, in particular in an aircraft and, more particularly, in a rotary wing aircraft. This object is solved by a carbon fiber reinforced polymer panel arrangement having the features of claim 1.

More specifically, according to the present invention a carbon fiber reinforced polymer panel arrangement comprises at least one carbon fiber reinforced polymer panel that is provided with interlocking elements associated with a zip fastener. The interlocking elements are rigidly attached to an associated interlocking element tape. The associated interlocking element tape is sewed to the at least one carbon fiber reinforced polymer panel, wherein the at least one carbon fiber reinforced polymer panel comprises a carbon fiber reinforced polymer fabric that is infused with epoxy resin. The associated interlocking element tape is sewed to the carbon fiber reinforced polymer fabric by means of carbon fiber yarn.

Preferably, two or more carbon fiber reinforced polymer panels are interconnected using an associated zip fastener, in order to connect them detachably to each other and, thus, to create opening areas in a vehicle, in particular in an aircraft and, more particularly, in a rotary wing aircraft for technical applications, such as maintenance for example. Advantageously, such opening areas are completely integrated into the structure of the vehicle, i. e. to the airframe structure or fuselage of the rotary wing aircraft, so that there is no more need to manufacture separately any maintenance door or trap. As manufacturing of carbon fiber reinforced polymer structures is generally expensive and time consuming, this advantage should not be neglected. Furthermore, as the opening areas would be part of the structure of the vehicle, there is no need to fix a separate maintenance door or trap using comparatively heavy screws, bolts or other fixation means, so that an overall weight of the vehicle can be reduced. Moreover, as access to corresponding parts of the vehicle that must be inspected regularly is made much easier, respective maintenance duration and costs can be reduced.

According to one aspect of the present invention, the zip fasteners are manufactured using carbon fiber reinforced polymer manufacturing methods that are usually used for manufacturing vehicle structural parts, in particular aircraft structural parts and, more particularly rotary wing aircraft structural parts. More specifically, the zip fastener is sewed to a carbon fiber mat(s), and more specifically to carbon fiber plies or fabric, which is then infused/impregnated with epoxy resin and cured to produce the inventive carbon fiber reinforced polymer panel. Advantageously, integration of such a zip fastener into the carbon fiber reinforced polymer panel allows avoiding of additional manufacturing, bonding and/or assembling steps after the manufacturing of the panel.

In order to comply with the high requirements that must be met for an application of such zip fasteners on rotary wing aircrafts or, more generally, for an application in the transport industry and/or in the aeronautic industry, the zip fastener must fulfill a multiplicity of material and function criteria. These criteria are at least in part due to the intended application environment of the carbon fiber reinforced polymer panel arrangement according to the present invention, i. e. as maintenance trapdoors, in firewall arrangements and/or in emergency exits of vehicles in general, in particular in aircrafts and, more particularly, in rotary wing aircrafts, as well as to underlying flight regulations and certification requirements existing in such intended application environments. Consequently, these criteria are applied to the zip fasteners, but also to the carbon fiber reinforced polymer panels as such.

More specifically, these criteria imply a temperature resistance to temperatures comprised between -45°C to 160°C, and at least a possible temporal resistance to a peak temperature higher than 180°C without structural deformation. Furthermore, these criteria imply a high resistance to humidity and corrosion, to solvents, cleaning fluids and de-icing fluids, as well as to solar radiation. Moreover, these criteria imply a high fire resistance respectively flame resistance.

It should be noted that at least some of these criteria are already fulfilled by commercially available zip fasteners. For instance, zip fasteners are already used on diving suits and, thus, meet the criteria concerning humidity and corrosion resistance. Furthermore, zip fasteners are also used on firemen suits and also as part of flame protection systems in buildings and for space applications. Such zip fasteners are e. g. produced by the YKK Corporation and could form the basis for suitable zip fasteners that can be integrated into the inventive carbon fiber reinforced polymer panels.

According to a further preferred embodiment of the invention, at least one other carbon fiber reinforced polymer panel is provided with other interlocking elements associated with the zip fastener. The other interlocking elements are adapted for being interlocked with the interlocking elements of the at least one carbon fiber reinforced polymer panel for interconnecting the at least one carbon fiber reinforced polymer panel and the at least one other carbon fiber reinforced polymer panel in a releasable manner, wherein the interlocking elements and the other interlocking elements define the zip fastener.

According to a further preferred embodiment of the invention, the other interlocking elements are rigidly attached to another associated interlocking element tape. The other associated interlocking element tape is sewed to the at least one other carbon fiber reinforced polymer panel by means of carbon fiber yarn.

According to a further preferred embodiment of the invention, the at least one other carbon fiber reinforced polymer panel comprises a carbon fiber reinforced polymer fabric that is infused with epoxy resin. The other associated interlocking element tape is sewed to the carbon fiber reinforced polymer fabric by means of the carbon fiber yarn.

According to a further preferred embodiment of the invention, the at least one carbon fiber reinforced polymer panel, the at least one other carbon fiber reinforced polymer panel and the zip fastener are at least adapted for use in temperatures comprised in a range from -45°C to +160°C.

According to a further preferred embodiment of the invention, the at least one carbon fiber reinforced polymer panel, the at least one other carbon fiber reinforced polymer panel and the zip fastener are adapted to withstand temperatures of at least +180°C without structural deformation.

According to a further preferred embodiment of the invention, the at least one carbon fiber reinforced polymer panel, the at least one other carbon fiber reinforced polymer panel and the zip fastener define an airtight and watertight structure.

According to a further preferred embodiment of the invention, the at least one carbon fiber reinforced polymer panel, the at least one other carbon fiber reinforced polymer panel and the zip fastener are adapted to resist, at least within predetermined tolerances, to humidity, corrosion, solvents, cleaning fluids, de-icing fluids, solar radiation and fire.

According to a further preferred embodiment of the invention, the associated interlocking element tape is sewed to the at least one carbon fiber reinforced polymer panel in an airtight and watertight manner.

It should be noted that on the basis of the above described teachings a vehicle can be provided with a carbon fiber reinforced polymer panel arrangement that comprises at least one carbon fiber reinforced polymer panel that is provided with interlocking elements associated with a zip fastener. The interlocking elements are rigidly attached to an associated interlocking element tape. The associated interlocking element tape is sewed to the at least one carbon fiber reinforced polymer panel. Preferably, such a vehicle is embodied as an aircraft, in particular as a rotary wing aircraft.

The present invention further provides a method of manufacturing a carbon fiber reinforced polymer panel. The method comprises at least the steps of providing a carbon fiber reinforced polymer fabric, providing an interlocking element tape comprising interlocking elements that are associated with a zip fastener and that are rigidly attached to the interlocking element tape, and sewing the associated interlocking element tape to the carbon fiber reinforced polymer fabric. The step of sewing the associated interlocking element tape to the carbon fiber reinforced polymer fabric is performed using carbon fiber yarn. The method further comprises the step of infusing the carbon fiber reinforced polymer fabric, to which the associated interlocking element tape is sewed, by means of a resin infusion processing with epoxy resin.

According to one aspect of the present invention, the interlocking element tape is sewed to a carbon fiber reinforced polymer fabric. Sewing of carbon fibers mats, i. e. of carbon fiber plies or fabric, is already well-known in the manufacturing of dry preforms, and e. g. already applied by Airbus Deutschland GmbH. In order to ensure that the manufactured carbon fiber reinforced polymer panel arrangements offer optimal mechanical properties, the sewing using carbon fiber yarns may be preferred. However, any type of yarn with appropriate properties may be used. Ideally the carbon fiber yarn should be continuous and not made of many filaments. Once the interlocking element tape is sewed to the carbon fiber mats, the preform may be prepared using also e. g. well-known technology to build/shape the final structure.

The zip fastener itself may be protected using tape in order to avoid an associated zipper slider and "teeth" to be fixed or damaged by resin during a subsequent infusion and curing. The dry preform is then infused using any kind of Resin Infusion (RI) processing. RI processing consists in the resin infiltration of a textile performed by either positive or negative pressure, followed by curing of the matrix. Various types of RI processing currently exist as manufacturing options. The major variants of RI processing are resin transfer molding (RTM), vacuum assisted resin transfer molding (VARTM), vacuum assisted resin infusion (VARI), and vacuum assisted processing (VAP). As the resins used for aeronautic applications are usually cured at a temperature of 180°C for many hours depending on the size of the part to be cured, the zip fastener has to withstand these conditions.

Alternatively, the interlocking element tape is sewed to a prepreg material. The term "prepreg" is meant to designate a woven or braided fabric or cloth-like tape material, e.g., fiberglass or carbon fibers, that have been impregnated with an uncured or partially cured resin, which is flexible enough to be formed into a desired shape, then "cured," e.g., by application of heat in an oven or an autoclave, to harden the resin into a strong, rigid, fiber-reinforced structure.

According to a further preferred embodiment of the invention, the resin infusion processing with epoxy resin comprises resin infiltration into the carbon fiber reinforced polymer fabric by means of positive or negative pressure, and curing of the resin infiltrated carbon fiber reinforced polymer fabric.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a schematic view of a vehicle that is adapted to receive a carbon fiber reinforced polymer panel arrangement according to the present invention,
- Figure 2 shows an exploded perspective view of the vehicle of Figure 1,
- Figure 3 shows an enlarged view of a firewall of the vehicle of Figure 1 and Figure 2 with a carbon fiber reinforced polymer panel arrangement according to the present invention,
- Figure 4 shows a section of the assembly of Figure 3,
- Figure 5 shows a perspective view of a carbon fiber reinforced polymer panel arrangement according to the present invention, and
- Figure 6 illustrates a method of manufacturing the carbon fiber reinforced polymer panel arrangement of Figure 5 according to the present invention.

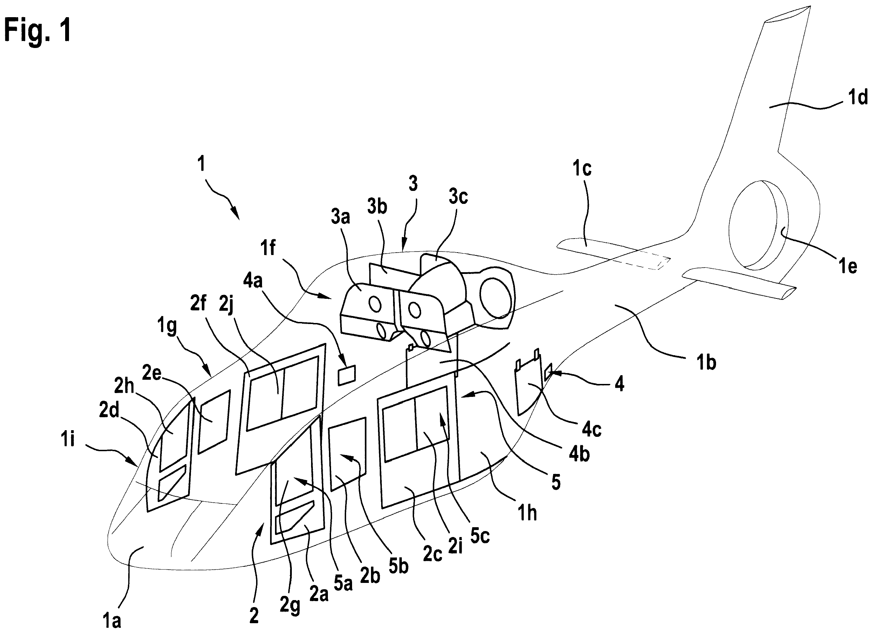

Figure 1 shows a vehicle 1 that is exemplarily illustrated as an aircraft, in particular as a rotary wing aircraft and, more particularly, as a helicopter. Thus, for purposes of simplicity and clarity, the vehicle 1 is hereinafter referred to as the "helicopter" 1. The present invention is, however, not limited to helicopters and can likewise be applied to any other vehicle, in particular to a vehicle that is controllable in a flowing medium, such as air or water, independent of a particular configuration thereof.

Illustratively, the helicopter 1 comprises a fuselage 1a that defines a tail boom 1b, which exemplarily comprises a tail wing 1c, a vertical tail plane 1d, which is also referred to hereinafter as the "fin 1d", and a shroud 1e for accommodation of a suitable counter-torque device, such as a tail rotor, which is configured to provide counter-torque during operation in order to balance the helicopter 1 in terms of yaw. The tail boom 1b may further be provided e. g. with a horizontal stabilizer, a bumper and so on.

It should be noted that only the fuselage 1a with the tail boom 1b are shown in Figure 1 for purposes of simplicity and clarity of the drawings. However, other conventional components, such as e. g. a rotor and a landing gear of the helicopter 1, are not shown, as they are well-known to the person skilled in the art and not part of the present invention and would, thus, only unnecessarily encumber and complicate the representation.

Illustratively, the fuselage 1a comprises at least two longitudinal side walls, a board side shell 1h, which is also referred to hereinafter as the "board side wall 1h", and a starboard side shell 1i, which is also referred to hereinafter as the "starboard side wall 1i", both of which are preferably connected to the tail boom 1b. The board side wall 1h and the starboard side wall 1i exemplarily comprise a plurality of doors and/or windows 2. By way of example, the board side wall 1h comprises a co-pilot door 2a with a co-pilot door window 2g, a board side passenger window 2b and a board side sliding door arrangement 2c with a board side sliding door window 2i, and the starboard side wall 1i comprises a pilot door 2d with a pilot door window 2h, a starboard side passenger window 2e and a starboard side sliding door arrangement 2f with a starboard side sliding door window 2j.

The fuselage 1a illustratively further comprises an outer surface 1g and preferably defines at least a drive system accommodating region 1f and a cockpit, and may further define a passenger cabin and/or a cargo compartment. However, for simplicity and clarity of the description, such a cockpit, passenger cabin and cargo compartment are not explained in greater detail.

The drive system accommodating region 1f preferably accommodates one or more engines that are adapted for driving the helicopter 1, e. g. by providing power to an associated power distribution unit, such as a gearbox, which then provides this power to a suitable propelling unit, such as e. g. a propeller, rotor or other. Preferably, the one or more engines are embodied as air breathing propulsion engines, such as diesel engines, gas engines, gas turbines and so on, which combust a fuel/air mix for power generation. As all such air breathing propulsion engines generate heat, the drive system accommodating region 1f is equipped with at least one firewall arrangement 3 that defines a fire-resistant separation between the air breathing propulsion engines and remaining parts of the fuselage 1a. However, as the air breathing propulsion engines as such are not part of the present invention, they are not explained in greater detail for brevity and conciseness.

The at least one firewall arrangement 3 exemplarily comprises a front firewall 3a, a mid firewall 3b and a rear firewall 3c. However, the firewall arrangement 3 is not limited to such a configuration and may also comprise more or less firewalls and/or additional components.

According to one aspect of the present invention, the fuselage 1a and, more generally the helicopter 1, is further provided with a plurality of maintenance trapdoors 4 and with emergency exits 5. Illustratively, the plurality of maintenance trapdoors 4 comprises two starboard side traps 4a, 4b and one board side trap 4c, and the emergency exits 5 comprise a co-pilot door emergency exit 5a, a passenger window emergency exit 5b and a board side sliding door emergency exit 5c. The emergency exits 5a, 5b, 5c are respectively defined by the co-pilot door window 2g, the board side passenger window 2b and the board side sliding door window 2i.

However, the plurality of maintenance trapdoors 4 and the emergency exits 5 are not limited to the illustrated maintenance traps 4a, 4b, 4c and emergency exits 5a, 5b, 5c. Instead, more or less maintenance trapdoors and/or emergency exits can be provided. Furthermore, it should be noted that only a part of all emergency exits are labelled for simplicity and clarity of the drawings and that, e. g. the pilot door window 2h, the starboard side passenger window 2e and the starboard side sliding door window 2j may likewise define emergency exits.

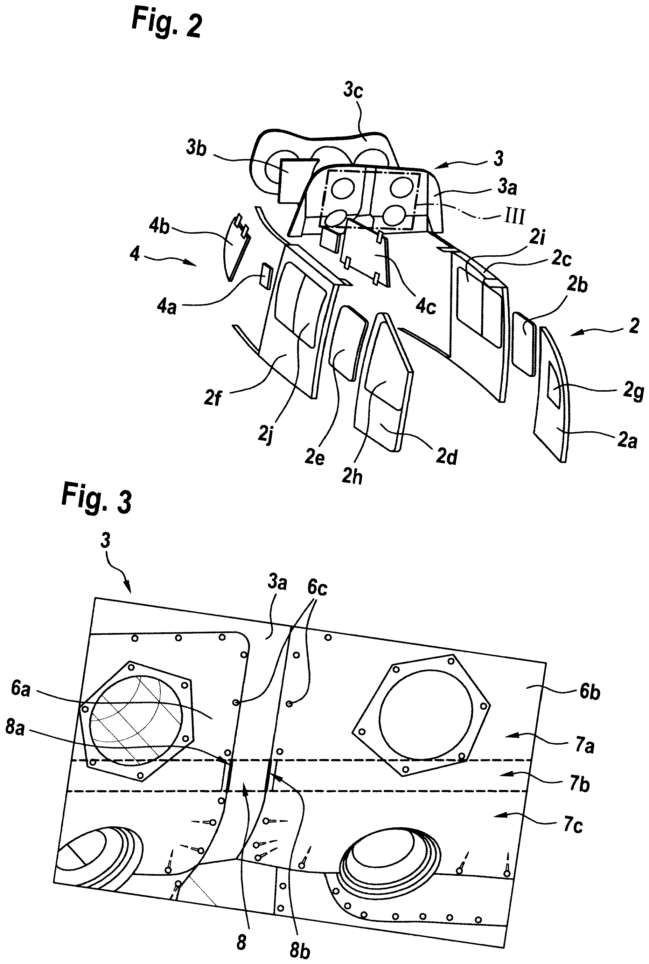

Figure 2 shows the plurality of doors and/or windows 2, the at least one firewall arrangement 3 and the plurality of maintenance trapdoors 4 of Figure 1 to further illustrate the co-pilot door 2a with the co-pilot door window 2g, the board side passenger window 2b, the board side sliding door arrangement 2c with the board side sliding door window 2i, the pilot door 2d with the pilot door window 2h, the starboard side passenger window 2e, the starboard side sliding door arrangement 2f with the starboard side sliding door window 2j, the front firewall 3a, the mid firewall 3b, the rear firewall 3c and the maintenance traps 4a, 4b, 4c of Figure 1. As described above, the plurality of doors and/or windows 2 defines the emergency exits 5 of Figure 1 according to one aspect of the present invention. An enlarged section III of the front firewall 3a is described hereinafter with respect to Figure 3.

Figure 3 shows the front firewall 3a of the firewall arrangement 3 of Figure 1 and Figure 2. According to one aspect of the present invention, the front firewall 3a is provided with a starboard side detachable panel 6a and a board side detachable panel 6b. These detachable panels 6a, 6b can be detached and removed from the front firewall 3a e. g. for inspection and maintenance purposes. Preferably, the detachable panels 6a, 6b and also the front firewall 3a as such are made of carbon fiber reinforced polymer (CFRP).

Illustratively, the representation of the front firewall 3a and the detachable panels 6a, 6b is divided into three different sections: an upper section 7a, a middle section 7b and a lower section 7c. In the upper and lower sections 7a, 7c, the detachable panels 6a, 6b are exemplarily attached to the front firewall 3a by means of conventional fasteners 6c, such as screws, by way of example. In other words, in conventional arrangements the fasteners 6c are used for detachably attaching the detachable panels 6a, 6b to the front firewall 3a. It should be noted that only two fasteners 6c are labelled for simplicity and clarity of the drawings, but that other fasteners are readily recognizable.

However, the conventional fasteners 6a and, more specifically, corresponding screws have a certain weight that increases an overall weight of the helicopter 1 of Figure 1. Furthermore, removal and reinstallation of such screws is time-consuming and, thus, expensive.

In order to simplify and speed up detachment of the detachable panels 6a, 6b from the front firewall 3a, as well as to speed up reinstallation thereof, the front firewall 3a is provided with a zip-integrated firewall section 8, where the detachable panels 6a, 6b are attached to the front firewall 3a by means of associated zip fasteners 8a, 8b. The zip-integrated firewall section 8 is illustratively arranged in the middle section 7b. However, according to one aspect of the present invention, the detachable panels 6a, 6b are entirely attached to the front firewall 3a by means of the zip fasteners 8a, 8b, which thus completely replace the conventional fasteners 6c. Therefore, the detachable panels 6a, 6b are preferably provided with the zip fasteners 8a, 8b at their entire periphery. In other words, the different sections 7a, 7b, 7c are only represented for illustrating the difference between the conventional fastening structure and the inventive fastening structure, which is preferably implemented in all three sections 7a, 7b, 7c, but not for restricting the present invention to such an implementation.

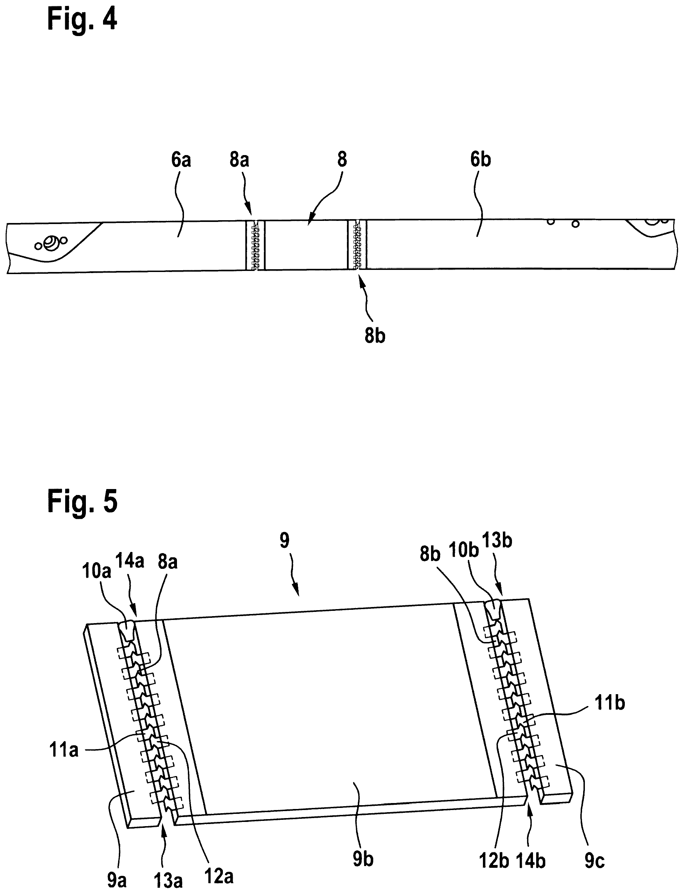

Figure 4 shows the middle section 7b of Figure 3 for further illustrating the zip-integrated firewall section 8. As described above, the latter is connected to the detachable panels 6a, 6b by means of the zip fasteners 8a, 8b of Figure 3.

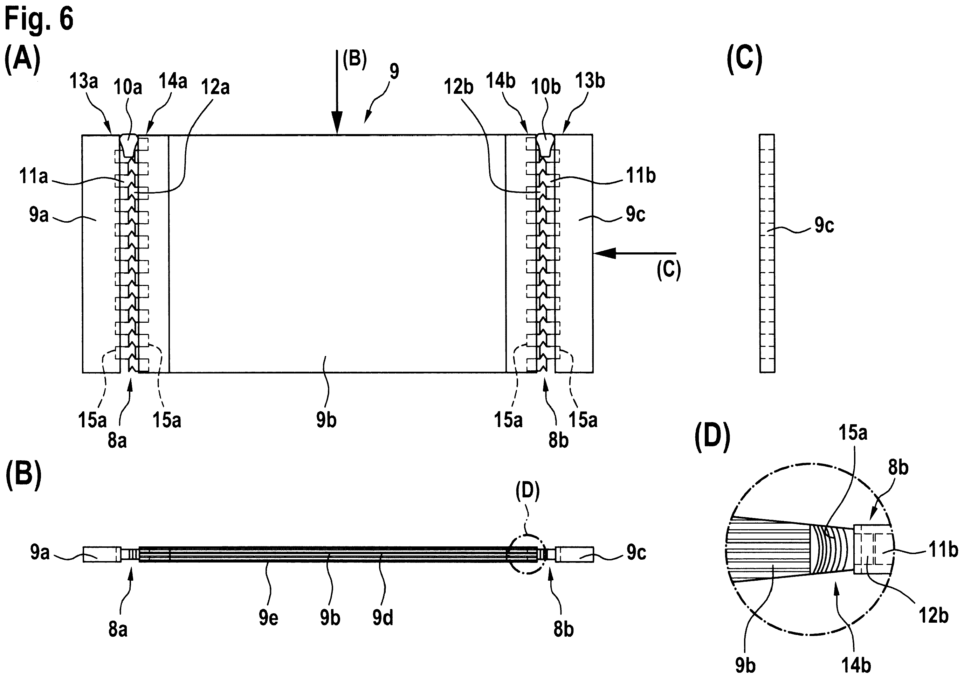

It should be noted that the application of the zip fasteners 8a, 8b is described with respect to Figure 3 and Figure 4 in the context of an implementation in the firewall arrangement 3 of Figure 3. However, according to one aspect of the present invention the zip fasteners 8a, 8b can also be used for a detachable attachment of other detachable panels, e. g. in an implementation of the co-pilot door 2a, the co-pilot door window 2g, the board side passenger window 2b, the board side sliding door arrangement 2c, the board side sliding door window 2i, the pilot door 2d, the pilot door window 2h, the starboard side passenger window 2e, the starboard side sliding door arrangement 2f, the starboard side sliding door window 2j, the front firewall 3a, the mid firewall 3b, the rear firewall 3c and the maintenance traps 4a, 4b, 4c of Figure 1 and Figure 2, as well as the emergency exits 5 of Figure 1. Therefore, a more general arrangement that uses the zip fasteners 8a, 8b is described below with reference to Figure 5 and Figure 6.

Figure 5 shows a CFRP panel arrangement 9 according to one aspect of the present invention. Preferably, this arrangement 9 comprises at least one CFRP panel 9b that is provided with interlocking elements 12a, 12b associated with the zip fastener 8a, 8b of Figure 4. The interlocking elements 12a, 12b are preferably rigidly attached to an associated interlocking element tape 14a, 14b.

According to one aspect of the present invention, this associated interlocking element tape 14a, 14b is sewed to the at least one CFRP panel 9b, preferably in an airtight and watertight manner and preferentially by means of carbon fiber yarn (15a in Figure 6). More specifically, the at least one CFRP panel 9b preferably comprises a CFRP fabric (9d in Figure 6) that is infused with epoxy resin (9e in Figure 6) and wherein the associated interlocking element tape 14a, 14b is sewed to the CFRP fabric (9d in Figure 6) by means of the carbon fiber yarn (15a in Figure 6)

By way of example, the at least one CFRP panel 9b is a single CFRP panel that is provided with the interlocking elements 12a on one side thereof and with the interlocking elements 12b on another side thereof. However, the interlocking elements 12a, 12b may likewise be provided on other sides of the CFRP panel 9b, which may also be provided only with the interlocking elements 12a or 12b at its entire periphery such that the latter surrounds the CFRP panel 9b.

Illustratively, at least one and, exemplarily, two other CFRP panels 9a, 9c are provided and respectively equipped with other interlocking elements 11a, 11b that are also associated with the zip fasteners 8a, 8b. Preferably, the other interlocking elements 11a, 11b are rigidly attached to associated interlocking element tapes 13a, 13b, which are preferentially respectively sewed to the CFRP panels 9a, 9c, preferably in an airtight and watertight manner and preferentially by means of carbon fiber yarn (15a in Figure 6). More specifically, the CFRP panels 9a, 9c preferably comprise a CFRP fabric that is infused with epoxy resin, wherein the other associated interlocking element tapes 13a, 13b are sewed to this CFRP fabric by means of the carbon fiber yarn (15a in Figure 6).

The other interlocking elements 11a, 11b are preferably adapted for being interlocked with the interlocking elements 12a, 12b of the CFRP panel 9b for interconnecting the CFRP panel 9b and the CFRP panels 9a, 9c in a releasable manner. Therein, the interlocking elements 11a, 12a define the zip fastener 8a, which can preferably be opened and closed by means of an associated zipper slider 10a, and the interlocking elements 11b, 12b define the zip fastener 8b, which can preferably be opened and closed by means of an associated zipper slider 10b.

According to one aspect of the present invention, the CFRP panels 9a, 9b, 9c and the zip fasteners 8a, 8b define an airtight and watertight structure. Preferably, the CFRP panels 9a, 9b, 9c and the zip fasteners 8a, 8b are at least adapted for use in temperatures comprised in a range from -45°C to +160°C and are further adapted to withstand temperatures of at least +180°C without structural deformation. Moreover, the CFRP panels 9a, 9b, 9c and the zip fasteners 8a, 8b are adapted to resist, at least within predetermined tolerances, to humidity, corrosion, solvents, cleaning fluids, de-icing fluids, solar radiation and fire.

It should be noted that the arrangement 9 is illustrated by way of example as a structure wherein the CFRP panel 9b is detachably attached to the CFRP panels 9b, 9c by means of the zip fasteners 8a, 8b. However, the CFRP panel 9b may alternatively be attached to one or more other panels that are provided with the other interlocking elements 11a, 11b. These one or more other panels do not necessarily need to be implemented as CFRP panels and may be implemented from other materials, such as e. g. metal and so on.

Figure 6 shows in part (A) the CFRP panel arrangement 9 of Figure 5 in top view and in part (C) in side view and illustrates a method of manufacturing the CFRP panel 9b of Figure 5. It should be noted that the CFRP panels 9a, 9c of Figure 5 are preferably manufactured in a similar manner, so that a detailed description thereof can be omitted for brevity and conciseness.

The manufacturing method starts as illustrated in part (B) of Figure 6 with the provision of a CFRP fabric 9d and at least one and, exemplarily, the two interlocking element tapes 14a, 14b of Figure 5 that are provided with the interlocking elements 12a, 12b of Figure 5. As described above, the interlocking elements 12a, 12b are associated with the zip fasteners 8a, 8b of Figure 5 and rigidly attached to the interlocking element tapes 14a, 14b.

In a first method step, the interlocking element tapes 14a, 14b are sewed to the CFRP fabric 9d. This is preferably performed using carbon fiber yarn 15a, as illustrated in parts (A) and (D) of Figure 6.

Then, the CFRP fabric 9d to which the associated interlocking element tapes 14a, 14b are sewed is infused with epoxy resin 9e by means of an associated RI processing. The RI processing with the epoxy resin 9e preferably comprises resin infiltration at least into the CFRP fabric 9d by means of positive or negative pressure, and curing of the resin infiltrated CFRP fabric 9d. Various currently existing or in the future developed types of RI processing can be selected as manufacturing options. The major currently existing variants of RI processing are resin transfer molding (RTM), vacuum assisted resin transfer molding (VARTM), vacuum assisted resin infusion (VARI), and vacuum assisted processing (VAP). Preferably, the interlocking elements 12a, 12b and the zipper sliders 10a, 10b are protected during the RI processing and curing using tape in order to avoid them from being fixed or damaged by the epoxy resin 9e during the RI processing and the subsequent curing.

It should be noted that modifications to the above described embodiments are within the common knowledge of the person skilled in the art and, thus, also considered as being part of the present invention. It should further be noted that the drawings are only intended for schematically representing embodiments of the present invention and not for showing detailed constructions thereof.

### Reference List

- 1: rotary wing aircraft
- 1a: fuselage
- 1b: tail boom
- 1c: tail wing
- 1d: fin
- 1e: tail rotor shroud
- 1f: drive system accommodating region
- 1g: aircraft outer surface
- 1h: board side wall
- 1i: starboard side wall
- 2: aircraft doors and windows
- 2a: co-pilot door
- 2b: board side passenger window
- 2c: board side sliding door arrangement
- 2d: pilot door
- 2e: starboard side passenger window
- 2f: starboard side sliding door arrangement
- 2g: co-pilot door window
- 2h: pilot door window
- 2i: board side sliding door window
- 2j: starboard side sliding door window
- 3: firewall arrangement
- 3a: front firewall
- 3b: mid firewall
- 3c: rear firewall
- 4: maintenance traps
- 4a, 4b: starboard side maintenance traps
- 4c: board side maintenance traps
- 5: aircraft emergency exits
- 5a: co-pilot door emergency exit
- 5b: board side passenger window emergency exit
- 5c: board side sliding door emergency exit
- 6a: front firewall starboard side detachable panel
- 6b: front firewall board side detachable panel
- 6c: detachable panel fasteners
- 7a: upper section
- 7b: middle section
- 7c: lower section
- 8: zip-integrated firewall section
- 8a, 8b: zip fasteners
- 9: CFRP panel arrangement
- 9a, 9b, 9c: zip-integrated CFRP panels
- 9d: CFRP fabric
- 9e: epoxy resin
- 10a, 10b: zipper sliders
- 11a, 11b: outer interlocking elements
- 12a, 12b: inner interlocking elements
- 13a, 13b: outer interlocking element tapes
- 14a, 14b: inner interlocking element tapes
- 15a: carbon fiber yarn

## Claims

1. A carbon fiber reinforced polymer panel arrangement (9), comprising at least one carbon fiber reinforced polymer panel (9b) that is provided with interlocking elements (12a, 12b) associated with a zip fastener (8a, 8b), said interlocking elements (12a, 12b) being rigidly attached to an associated interlocking element tape (14a, 14b), **characterized in that** said associated interlocking element tape (14a, 14b) is sewed to said at least one carbon fiber reinforced polymer panel (9b), wherein said at least one carbon fiber reinforced polymer panel (9b) comprises a carbon fiber reinforced polymer fabric (9d) that is infused with epoxy resin (9e), said associated interlocking element tape (14a, 14b) being sewed to said carbon fiber reinforced polymer fabric (9d) by means of carbon fiber yarn (15a).

2. The carbon fiber reinforced polymer panel arrangement (9) according to claim 1, comprising at least one other carbon fiber reinforced polymer panel (9a, 9c) that is provided with other interlocking elements (11a, 11b) associated with said zip fastener (8a, 8b), said other interlocking elements (11a, 11b) being adapted for being interlocked with said interlocking elements (12a, 12b) of said at least one carbon fiber reinforced polymer panel (9b) for interconnecting said at least one carbon fiber reinforced polymer panel (9b) and said at least one other carbon fiber reinforced polymer panel (9a, 9c) in a releasable manner, wherein said interlocking elements (12a, 12b) and said other interlocking elements (11a, 11b) define said zip fastener (8a, 8b).

3. The carbon fiber reinforced polymer panel arrangement (9) according to claim 2, wherein said other interlocking elements (11a, 11b) are rigidly attached to another associated interlocking element tape (13a, 13b), said other associated interlocking element tape (13a, 13b) being sewed to said at least one other carbon fiber reinforced polymer panel (9a, 9c) by means of carbon fiber yarn (15a).

4. The carbon fiber reinforced polymer panel arrangement (9) according to claim 3, wherein said at least one other carbon fiber reinforced polymer panel (9a, 9c) comprises a carbon fiber reinforced polymer fabric that is infused with epoxy resin, said other associated interlocking element tape (13a, 13b) being sewed to said carbon fiber reinforced polymer fabric by means of said carbon fiber yarn (15a).

5. The carbon fiber reinforced polymer panel arrangement (9) according to claim 2, wherein said at least one carbon fiber reinforced polymer panel (9b), said at least one other carbon fiber reinforced polymer panel (9a, 9c) and said zip fastener (8a, 8b) are at least adapted for use in temperatures comprised in a range from -45°C to +160°C.

6. The carbon fiber reinforced polymer panel arrangement (9) according to claim 5, wherein said at least one carbon fiber reinforced polymer panel (9b), said at least one other carbon fiber reinforced polymer panel (9a, 9c) and said zip fastener (8a, 8b) are adapted to withstand temperatures of at least +180°C without structural deformation.

7. The carbon fiber reinforced polymer panel arrangement (9) according to claim 6, wherein said at least one carbon fiber reinforced polymer panel (9b), said at least one other carbon fiber reinforced polymer panel (9a, 9c) and said zip fastener (8a, 8b) define an airtight and watertight structure.

8. The carbon fiber reinforced polymer panel arrangement (9) according to claim 6, wherein said at least one carbon fiber reinforced polymer panel (9b), said at least one other carbon fiber reinforced polymer panel (9a, 9c) and said zip fastener (8a, 8b) are adapted to resist, at least within predetermined tolerances, to humidity, corrosion, solvents, cleaning fluids, de-icing fluids, solar radiation and fire.

9. The carbon fiber reinforced polymer panel arrangement (9) according to claim 1, wherein said associated interlocking element tape (14a, 14b) is sewed to said at least one carbon fiber reinforced polymer panel (9b) in an airtight and watertight manner.

10. A method of manufacturing a carbon fiber reinforced polymer panel (9b), comprising at least the steps of:
- Providing a carbon fiber reinforced polymer fabric (9d),
- Providing an interlocking element tape (14a, 14b) comprising interlocking elements (12a, 12b) that are associated with a zip fastener (8a, 8b) and that are rigidly attached to said interlocking element tape (14a, 14b),
- Sewing said associated interlocking element tape (14a, 14b) to said carbon fiber reinforced polymer fabric (9d) using carbon fiber yarn (15a),
- Infusing the carbon fiber reinforced polymer fabric (9d), to which said associated interlocking element tape (14a, 14b) is sewed, by means of a resin infusion processing with epoxy resin.

11. The method according to claim 10, wherein said resin infusion processing with epoxy resin comprises resin infiltration into said carbon fiber reinforced polymer fabric (9d) by means of positive or negative pressure, and curing of said resin infiltrated carbon fiber reinforced polymer fabric (9d).

## Patentansprüche

1. Kohlenstofffaserverstärkte Polymerplattenanordnung (9), umfassend mindestens eine kohlenstofffaserverstärkte Polymerplatte (9b), die mit ineinandergreifenden Elementen (12a, 12b) versehen ist, die einem Reißverschluss (8a, 8b) zugeordnet sind, wobei die ineinandergreifenden Elemente (12a, 12b) starr an einem zugehörigen Band ineinandergreifender Elemente (14a, 14b) befestigt sind, **dadurch gekennzeichnet, dass** das zugehörige Band ineinandergreifender Elemente (14a), 14b) an die mindestens eine kohlenstofffaserverstärkte Polymerplatte (9b) angenäht ist, wobei die mindestens eine kohlenstofffaserverstärkte Polymerplatte (9b) ein kohlenstofffaserverstärktes Polymergewebe (9d) umfasst, das mit Epoxidharz (9e) infundiert ist, wobei das zugehörige Band ineinandergreifender Elemente (14a, 14b) mittels Kohlefasergarn (15a) an das kohlenstofffaserverstärkte Polymergewebe (9d) angenäht ist.

2. Kohlenstofffaserverstärkte Polymerplattenanordnung (9) nach Anspruch 1, umfassend mindestens eine weitere kohlenstofffaserverstärkte Polymerplatte (9a, 9c), die mit anderen, dem Reißverschluss (8a, 8b) zugeordneten ineinandergreifenden Elementen (11a, 11b) versehen ist, wobei die anderen ineinandergreifenden Elemente (11a, 11b) eingerichtet sind, um mit den ineinandergreifenden Elementen (12a, 12b) der mindestens einen kohlenfaserverstärkten Polymerplatte (9b) ineinandergreifend verbunden zu sein, um die mindestens eine kohlenstofffaserverstärkte Polymerplatte (9b) mit der mindestens einen weiteren kohlenstofffaserverstärkten Polymerplatte (9a, 9c) lösbar zu verbinden, wobei die ineinandergreifenden Elemente (12a, 12b) und die anderen ineinandergreifenden Elemente (11a, 11b) den Reißverschluss (8a, 8b) definieren.

3. Kohlenstofffaserverstärkte Polymerplattenanordnung (9) nach Anspruch 2, bei der die anderen ineinandergreifenden Elemente (11a, 11b) starr an einem weiteren zugeordneten Band ineinandergreifender Elemente (13a, 13b) befestigt sind, wobei das andere zugehörige Band ineinandergreifender Elemente (13a, 13b) mit der mindestens einen anderen kohlenstofffaserverstärkten Polymerplatte (9a, 90) mittels Kohlefasergarn (15a) vernäht ist.

4. Kohlenstofffaserverstärkte Polymerplattenanordnung (9) nach Anspruch 3, bei der die mindestens eine weitere kohlenstofffaserverstärkte Polymerplatte (9a, 90) ein kohlenstofffaserverstärktes Polymergewebe umfasst, das mit Epoxidharz infundiert ist, wobei das andere zugehörige Band ineinandergreifender Elemente (13a, 13b) mit Hilfe des Kohlefasergarns (15a) auf das kohlenstofffaserverstärkte Polymergewebe genäht ist.

5. Kohlenstofffaserverstärkte Polymerplattenanordnung (9) nach Anspruch 2, bei der die mindestens eine kohlenstofffaserverstärkte Polymerplatte (9b), die mindestens eine weitere kohlenstofffaserverstärkte Polymerplatte (9a, 9c) und der Reißverschluss (8a, 8b) mindestens zur Verwendung bei Temperaturen im Bereich von -45°C bis +160°C geeignet sind.

6. Kohlenstofffaserverstärkte Polymerplattenanordnung (9) nach Anspruch 5, bei der die mindestens eine kohlenstofffaserverstärkte Polymerplatte (9b), die mindestens eine weitere kohlenstofffaserverstärkte Polymerplatte (9a, 90) und der Reißverschluss (8a, 8b) geeignet sind, Temperaturen von mindestens +180°C ohne strukturelle Verformung standzuhalten.

7. Kohlenstofffaserverstärkte Polymerplattenanordnung (9) nach Anspruch 6, bei der die mindestens eine kohlenstofffaserverstärkte Polymerplatte (9b), die mindestens eine weitere kohlenstofffaserverstärkte Polymerplatte (9a, 90) und der Reißverschluss (8a, 8b) eine luftdichte und wasserdichte Struktur definieren.

8. Kohlenstofffaserverstärkte Polymerplattenanordnung (9) nach Anspruch 6, bei der die mindestens eine kohlenstofffaserverstärkte Polymerplatte (9b), die mindestens eine weitere kohlenstofffaserverstärkte Polymerplatte (9a, 90) und der Reißverschluss (8a, 8b) geeignet sind, zumindest innerhalb vorgegebener Toleranzen Feuchtigkeit, Korrosion, Lösungsmittel, Reinigungsflüssigkeiten, Enteisungsmittel, Sonneneinstrahlung und Feuer zu widerstehen.

9. Kohlenstofffaserverstärkte Polymerplattenanordnung (9) nach Anspruch 1, wobei das zugehörige Band ineinandergreifender Elemente (14a, 14b) luft- und wasserdicht mit der mindestens einen kohlefaserverstärkten Polymerplatte (9b) vernäht ist.

10. Verfahren zur Herstellung einer kohlenstofffaserverstärkten Polymerplatte (9b), umfassend mindestens die Schritte des:
- Bereitstellens eines kohlenstofffaserverstärkten Polymergewebes (9d),
- Bereitstellen eines Bandes ineinandergreifender Elemente (14a, 14b) mit ineinandergreifenden Elementen (12a, 12b), die einem Reißverschluss (8a, 8b) zugeordnet sind und die fest mit dem Band ineinandergreifender Elemente (14a, 14b) verbunden sind,
- Nähen des zugehörigen Bandes ineinandergreifender Elemente (14a, 14b) an das kohlefaserverstärkte Polymergewebe (9d) unter Verwendung von Kohlefasergarn (15a),
- Infundieren des kohlenstofffaserverstärkten Polymergewebes (9d), auf das das zugehörige Band ineinandergreifender Elemente (14a, 14b) genäht ist, mit Epoxidharz mittels einer Harzinfusionsverarbeitung.

11. Verfahren nach Anspruch 10, bei dem die Harzinfusionsverarbeitung mit Epoxidharz die Harzinfiltration in das kohlenstofffaserverstärkte Polymergewebe (9d) mittels Über- oder Unterdruck und das Härten des harzinfiltrierten kohlenstofffaserverstärkten Polymergewebes (9d) umfasst.

## Revendications

1. Agencement de panneaux en polymère renforcé de fibre de carbone (9), comprenant au moins un panneau en polymère renforcé de fibre de carbone (9b) qui est pourvu d'éléments emboitables (12a, 12b) associés à une fermeture à glissière (8a, 8b), lesdits éléments emboitables (12a, 12b) étant fixés de façon rigide à une bande d'éléments emboitables associée (14a, 14b), **caractérisé en ce que** ladite bande d'éléments emboitables associée (14a, 14b) est cousue sur le au moins un panneau en polymère renforcé de fibre de carbone (9b), dans lequel ledit au moins un panneau en polymère renforcé de fibre de carbone (9b) comprend une toile en polymère renforcé de fibre de carbone (9d) qui est imprégnée de résine époxy (9e), ladite bande d'éléments emboitables associée (14a, 14b) étant cousue sur ladite toile en polymère renforcé de fibre de carbone (9d) à l'aide de fil en fibre de carbone (15a).

2. Agencement de panneaux en polymère renforcé de fibre de carbone (9) selon la revendication 1, comprenant au moins un autre panneau en polymère renforcé de fibre de carbone (9a, 9c) qui est prévu avec d'autres éléments emboitables (11a, 11b) associés à ladite fermeture à glissière (8a, 8b), lesdits autres éléments emboitables (11a, 11b) étant aptes à être emboités avec lesdits éléments emboitables (12a, 12b) dudit au moins un panneau en polymère renforcé de fibre de carbone (9b) pour raccorder entre eux ledit panneau en polymère renforcé de fibre de carbone (9b) et ledit au moins un autre panneau en polymère renforcé de fibre de carbone (9a, 9c) de façon détachable, dans lequel lesdits éléments emboitables (12a, 12b) et lesdits autres éléments emboitables (11a, 11b) définissent ladite fermeture à glissière (8a, 8b).

3. Agencement de panneaux en polymère renforcé de fibre de carbone (9) selon la revendication 2, dans lequel lesdits autres éléments emboitables (11a, 11b) sont fixés de façon rigide sur une autre bande d'éléments emboitables associée (13a, 13b), ladite autre bande d'éléments emboitables associée (13a, 13b) étant cousue sur ledit au moins un autre panneau en polymère renforcé de fibre de carbone (9a, 9c) à l'aide de fil en fibre de carbone (15a).

4. Agencement de panneaux en polymère renforcé de fibre de carbone (9) selon la revendication 3, dans lequel ledit au moins un autre panneau en polymère renforcé de fibre de carbone (9a, 9c) comprend une toile en polymère renforcé de fibre de carbone qui est imprégnée de résine époxy, ladite autre bande d'éléments emboitables associée (13a, 13b) étant cousue sur ladite toile en polymère renforcé de fibre de carbone à l'aide de fil en fibre de carbone (15a).

5. Agencement de panneaux en polymère renforcé de fibre de carbone (9) selon la revendication 2, dans lequel ledit au moins un panneau en polymère renforcé de fibre de carbone (9b), ledit au moins un autre panneau en polymère renforcé de fibre de carbone (9a, 9c) et ladite fermeture à glissière (8a, 8b) sont au moins aptes à l'utilisation à des températures comprises entre - 45° C et + 160° C.

6. Agencement de panneaux en polymère renforcé de fibre de carbone (9) selon la revendication 5, dans lequel ledit au moins un panneau en polymère renforcé de fibre de carbone (9b), ledit au moins un autre panneau en polymère renforcé de fibre de carbone (9a, 9c) et ladite fermeture à glissière (8a, 8b) sont aptes à supporter des températures d'au moins + 180° C sans déformation structurelle.

7. Agencement de panneaux en polymère renforcé de fibre de carbone (9) selon la revendication 6, dans lequel ledit au moins un panneau en polymère renforcé de fibre de carbone (9b), ledit au moins un autre panneau en polymère renforcé de fibre de carbone (9a, 9c) et ladite fermeture à glissière (8a, 8b) définissent une structure étanche à l'air et à l'eau.

8. Agencement de panneaux en polymère renforcé de fibre de carbone (9) selon la revendication 6, dans lequel ledit au moins un panneau en polymère renforcé de fibre de carbone (9b), ledit au moins un autre panneau en polymère renforcé de fibre de carbone (9a, 9c) et ladite fermeture à glissière (8a, 8b) sont aptes à résister, au moins dans des marges de tolérance prédéfinies, à l'humidité, à la corrosion, aux solvants, aux liquides de nettoyage, aux liquides de dégivrage, au rayonnement solaire et au feu.

9. Agencement de panneaux en polymère renforcé de fibre de carbone (9) selon la revendication 1, dans lequel ladite bande d'éléments emboitables associée (14a, 14b) est cousue sur ledit au moins un panneau en polymère renforcé de fibre de carbone (9b) de façon étanche à l'air et à l'eau.

10. Procédé de fabrication d'un panneau en polymère renforcé de fibre de carbone (9b), comprenant au moins les étapes de :
- mise à disposition d'une toile en polymère renforcé de fibre de carbone (9d),
- mise à disposition d'une bande d'éléments emboitables associée (14a, 14b) comprenant des éléments emboitables (12a, 12b) qui sont associés à une fermeture à glissière (8a, 8b) et qui sont fixés de façon rigide auxdits éléments emboitables associée (14a, 14b),
- couture de ladite bande d'éléments emboitables associée (14a, 14b) sur ladite toile en polymère renforcé de fibre de carbone (9d) en utilisant du fil en fibre de carbone (15a),
- imprégnation de la toile en polymère renforcé de fibre de carbone (9d), sur laquelle ladite bande d'éléments emboitables associée (14a, 14b) est cousue, à l'aide d'un processus d'imprégnation de résine avec de la résine époxy.

11. Procédé selon la revendication 10, dans lequel ledit processus d'imprégnation de résine avec de la résine époxy comprend l'infiltration de résine dans ladite toile en polymère renforcé de fibre de carbone (9d) à l'aide de pression positive ou négative, et la polymérisation de ladite toile en polymère renforcé de fibre de carbone (9d) infiltrée de résine.
